# EUROPEAN PATENT SPECIFICATION

(11) **EP 3 077 461 B1**
(45) Date of publication and mention of the grant of the patent: **07.07.2021**
(21) Application number: 14827729.6
(22) Date of filing: 18.11.2014
(51) Int. Cl.: C09B 67/46, C09B 67/22, G02B 26/00, G02F 1/167

(54) **PROCESS FOR THE PREPARATION OF DISPERSED COLOURED OR BLACK PARTICLES**
VERFAHREN ZUR HERSTELLUNG VON DISPERGIERTEN FARBIGEN ODER SCHWARZEN PARTIKELN
PROCÉDÉ POUR LA PRÉPARATION DES PARTICULES DISPERGUÉES COLORÉES OU NOIRES

(30) Priority: 02.12.2013 EP 13005608
(43) Date of publication of application: 12.10.2016
(73) Proprietor: Merck Patent GmbH, 64293 Darmstadt (DE); The Queen's University of Belfast, Belfast BT7 1NN (GB)
(72) Inventor: FARRAND, Louise Diane, Blandford Forum Dorset DT11 7BW (GB); TOPPING, Claire, Southampton SO16 7BF (GB); NORMAN, Sarah, Didcot OX11 0RT (GB)
(86) International application number: PCT/EP2014/003073
(87) International publication number: WO 2015/082047

(56) References cited:
- WO-A1-95/33085
- WO-A1-02/087738
- WO-A1-2011/154103
- WO-A1-2011/154104
- WO-A1-2013/026519
- WO-A1-2013/065485
- WO-A1-2013/079146
- WO-A2-03/058335
- WO-A2-2005/017046
- US-A- 4 065 259
- US-A1- 2012 194 899

## Description

This invention relates to a process for the preparation of a dispersion comprising coloured or black particles, which is useful especially in electrophoretic fluids and electrophoretic display devices.

EPDs (Electrophoretic Displays) and their use for electronic paper are known for a number of years. An EPD generally comprises charged electrophoretic particles dispersed between two substrates, each comprising one or more electrodes. The space between the electrodes is filled with a dispersion medium which is a different colour from the colour of the particles. The dispersion medium is usually a low refractive index solvent, such as dodecane. Fluorinated solvents may be used for example in Total Internal Reflection (TIR) type EPDs. If a voltage is applied between the electrodes, charged particles move to the electrode of opposite polarity. The particles can cover the observer's side electrode, so that a colour identical to the colour of the particles is displayed when an image is observed from the observer's side. Any image can be observed using a multiplicity of pixels. Mainly black and white particles are used. Available technologies of EPDs include electronic paper, commercially used in electronic books. This application uses black and white colour.

The use of different coloured particles in a single pixel has been exemplified in recent patent literature (US 7,304,634, GB 2 438 436, US 2007/0268244). Two particle systems comprising inorganic and resin particles are also known (EP 1 491 941). These coloured particles are only achievable by complicated processes and/or they are only suitable for specific applications. Particles comprising a polymer and a pigment or a dye prepared by an evaporative process are described in US 2010/120948, WO 2011/154103, WO 2011/154104, WO 2013/026519, Nippon Gazo Gakkaishi 46(4) 2007, 247-253, and Kobunshi Ronbunshu, 62(7), 310-315 (July 2005).

However, there still is a need for a simple, repeatable and cheap preparation of fluids comprising coloured or black particles dispersed in low refractive index media, especially in a fluorinated media, wherein the coloured or black particles do not leach colour in a dispersion and preferably show electrophoretic mobility. An improved route to provide coloured or black particles and new fluids comprising such particles has now been found.

WO 03/058335 A2, WO 2005/017046 A2, WO 2013/079146 A1, WO 2013/065485 A1, US 2012/194899 A1, US 4,065,259, WO 02/087738 A1 and WO 95/33085 A1 disclose particles for use in electrophoretic fluids but do not disclose or suggest a process as disclosed and claimed hereinafter.

The present invention relates to a process for the preparation of coloured or black particles dispersed in a non-polar solvent comprising the following steps:
a') forming a reverse emulsion comprising at least one dye, at least one polar solvent, at least one non-polar perfluorinated solvent, and at least one fluorinated surfactant, and
b) removing the polar solvent or polar solvents by evaporative methods, wherein the non-polar perfluorinated solvent or solvents are not removed, wherein the coloured or black particles consist of a dye and a fluorinated surfactant, and the polar solvent is selected from water, ethanol, methanol, acetonitrile, DMSO, DMF or mixtures thereof, and the dye is selected from Acid Red 37, Acid Fuchsine, Solvent Blue 35, Solvent Black 27, Solvent Black 29, Solvent Black 34, Acid Black 52, Acid Black 107, Acid Black 132, Acid Black 172, Acid Black 194, Acid Black 211, Acid Black 222, Direct Black 19, Direct Black 22, Direct Black 51, Direct Black 80, and Direct Black 112.

Throughout the specification, "reverse emulsion" means that a non-polar, fluorinated or non-fluorinated solvent forms a continuous phase and a polar solvent forms a discontinuous phase (internal phase). Furthermore, the present process is called either "evaporative precipitation" or "reverse emulsion solvent removal" (RESR) due to the steps involved in forming a reverse emulsion and then removing the polar solvent from the internal phase by evaporative methods to form a dispersion of coloured or black particles in a non-polar, fluorinated or non-fluorinated, solvent as continuous phase.

The present invention provides a simple cost-effective and repeatable process to prepare coloured or black particles having low polydispersity, good steric stability, photostability, and heat stability, and which do not leach colour in a dispersion medium, and dispersions comprising such particles. It is most convenient that the process of the invention can directly yield dispersions of coloured or black particles in a liquid medium suitable for different display devices, primarily for EPDs. So, no solvent transfer step is required to change to the final solvent suitable for use as an electrophoretic fluid. Therefore, no unwanted solvent contamination occurs in the final formulation. This also allows transfer to other solvents suitable for EPD if so desired.

Preferably, the particles are formed directly in a low refractive index and/or specific high-density solvent, which is a non-polar perfluorinated solvent which is highly suitable for an EPD fluid without having to dry particles, and then re-disperse them. In particular, the present process allows separately manipulating colour, size, charge, mono-dispersity, steric stability, electrophoretic mobility, etc of the particles.

The new process does not require multiple steps or require expensive drying steps followed by difficult formulation into a low dielectric solvent. Advantageously, the present process uses materials which are largely non-hazardous and commercially available and does not require any chemical changes but only physical changes. The method developed is a simple process using as few as possible physical processes to yield the desired dispersions, especially an electrophoretic fluid, in-situ by forming a reverse emulsion and evaporating the internal phase solvent to give the desired coloured or black particles.

In addition, the particles may have the following properties: a non-swelling nature when dispersed in EPD solvent media, impact strength, hardness, dispersible in a non polar continuous phase that is the most used media for EPD, high electrophoretic mobility in dielectric media, excellent switching behaviour, and faster response times at comparable voltages.

An essential component of the invention is a dye. In principal, any dye which is internal phase dispersible or soluble is suitable. Preferably, the dye is water-soluble or water-dispersible or soluble or dispersible in a polar nonaqueous solvent, preferably in methanol, ethanol or methyl ethyl ketone. The invention can provide particles of the desired colour by simply choosing from the variety available commercially (or bespoke) dyes which are soluble in polar solvents and insoluble in non-polar, optionally fluorinated solvents. More than 1 dye can be used if required to achieve the desired shade. Preferably black dyes are used. The following dyes are used in the process according to the invention: Acid Red 37, Acid Fuchsine, Solvent Blue 35, Solvent Black 27, Solvent Black 29, Solvent Black 34, Acid Black 52, Acid Black 107, Acid Black 132, Acid Black 172, Acid Black 194, Acid Black 211, Acid Black 222, Direct Black 19, Direct Black 22, Direct Black 51, Direct Black 80, and/or Direct Black 112.

Especially preferred are: Direct Black 22, Acid Black 52, Acid Black 132, Acid Black 107, Acid Black 172, Solvent Black 27, Solvent Black 29, Solvent Blue 35, Acid Red 37, and/or Acid Fuchsine.

In particular, Direct Black 22, Acid Black 52, Acid Black 132, Acid Black 107, Acid Black 172, Solvent Black 27, and/or Solvent Black 29 are used.

Especially preferred are dyes which are as photostable as possible. The photostability is measured according to the Blue Wool Scale. Testing parameters are set out in the International Standard IEC 60068-2-5: Environmental Testing - Part 2-5: Tests - Test sA: Simulated solar radiation at ground level and guidance for solar radiation testing. The Blue Wool Scale measures and calibrates the permanence of colouring dyes. This test was developed for the textiles industry, but it has now been adopted by the printing industry and also within the polymer industry. Especially preferred are dyes with a blue wool scale of 5 or above, and especially 6 or above.

The dyes, especially the preferred dyes may be used in combination with additives, preferably with light stabilisers such as hindered amine light stabilisers (HALS) for example. Preferably, 1,2,2,6,6-pentamethylpiperidine or 1,2,2,6,6-pentamethyl-4-piperidinol, bis(1,2,2,6,6-pentamethyl-4-piperidinyl)-[(3,5-bis(1,1-dimethyl)-4-hydroxyphenyl]methyl]butylmalonate can be used or UV absorbers such as benzophenone, 2,4-dihydroxybenzophenone, 2-(2-hydroxy-5-methylphenyl)benzotriazole can be used. This dye/stabiliser combination can advantageously improve the photostability of the dye, preferably to a blue wool scale value of 5 or above, and especially 6 or above.

The light stabilisers are usually added to the internal phase during step a').

Solvents for the two phases of the reverse emulsion are preferably chosen to be as immiscible as possible whilst being good solvents for the components. Preferably the solvents are used in a weight ratio range for continuous phase to discontinuous phase of from 5:1 to 1:1, preferably 3.5:1 to 1:1, especially 2:1 to 1:1.

The continuous phase non-polar solvent is required to be a good solvent for the surfactants being used and the discontinuous phase must be a good solvent for the dye and for the polymer matrix material if such material is additionally used in combination with non-polar fluorinated solvents.

The continuous phase solvent can be chosen primarily on the basis of dielectric constant, refractive index, density and viscosity. A preferred solvent choice would display a low dielectric constant (<10, more preferably <6), high volume resistivity (about 10¹⁵ ohm-cm), a low viscosity (less than 5 cst), low water solubility, a high boiling point (>80°C), a very low refractive index (<1.32) and a density similar to that of the particles. Tweaking these variables can be useful in order to change the behaviour of the final application.

In process step a'), non-polar perfluorinated solvents are used. These perfluorinated solvents tend to be low dielectric, and high-density solvents. A density matched particle / solvent mixture will yield much improved settling or creaming characteristics and thus is desirable. For this reason, often it can be useful to add a lower density solvent to enable density matching, or a mixture of perfluorinated and partially fluorinated solvents. Adjustments of solvent variables in order to change the behaviour of the final application are known in the art. Preferred solvents are non-polar perfluorinated hydrocarbons, e. g. perfluoro(tributylamine), perfluoro (2-n-butyl hydrofuran), 1,1,1,2,3,4,4,5,5,5,-decafluoropentane, etc. Particularly, commercial non-polar fluorinated solvents such as the Fluorinert® FC or Novec® series from 3M and the Galden® serie from Solvay Solexis can be used, e.g.FC-3283, FC-40, FC-43. FC-75 and FC-70 and Novec® 7500 and Galden® 200 and 135. In particular, perfluoro(tributylamine) can be used. The discontinuous phase solvent is chosen primarily on the solubility of the dye, its boiling point relative to that of the continuous phase and its solubility in the continuous phase. A preferred discontinuous phase solvent shows a high dielectric constant ε, preferably ε >20, more preferably >40, especially >50. Those solvents are water, ethanol, methanol, acetonitrile, DMSO (dimethyl sulfoxide) and DMF (dimethylformamide). The solvent selected must have a boiling point lower than that of the continuous phase to allow its removal and it is also important to consider any azeotropes which may form restricting removal of the discontinuous phase solvent. Preferably water, ethanol and methanol, or mixtures thereof are used. The most preferred solvents are water (ε=80) and methanol.

Solvents which are particularly suitable for these 2 emulsion phases are a perfluoro(tributylamine), respectively as continuous phase and a water, ethanol, methanol, preferably water, and/or methanol, especially methanol, as discontinuous phase.

A further essential component of the present process is a surfactant, generally having a hydrophilic head group and a hydrophobic tail. Preferable examples are those with a hydrophilic-lipophilic balance HLB (as described in "Introduction to Surface and Colloid Chemistry" (Ed. DJ Shaw, Pub. Butterworth Heinemann)) less than 10. HLB of a surfactant is a measure of the degree to which the surfactant is hydrophilic or lipophilic, determined by calculating values for the different regions of the molecule. The head group may be a salt to allow charging or can also consist of an amine or acid moiety which can also, but does not have to, charge the particle.

The role of the surfactant is to stabilize the reverse emulsion when it is formed and then to stabilize the solid particles after solvent removal. The surfactant can also be used to charge the particles, allowing them to switch electrophoretically. This may be achieved by using a blend of surfactants or one single surfactant. Preferably the surfactant is used in 1-10 % by weight based on the total reverse emulsion.

Preferable surfactant additives have some form of block, branched, graft or comb-like structure to maximize physical or chemical adsorption onto the surface of the particles. Long or branched hydrophobic tails are preferable to maximize the steric stabilization of the surfactant. Suitable head groups are polyol derivatives such as glycerol or sorbitan. These provide an appropriate polarity to bind to the pigment surface. Also suitable are succinimide based surfactants, and alkyl sulfosuccinates. Preferred surfactants are nontoxic, hydrophobic, oleophobic, and chemically and biologically inert. Surfactant combinations may also be used.

Fluorinated surfactants are used in combination with the non-polar perfluorinated solvents used in step a'). Such are known to experts in the field and include (but are not limited to) the Disperbyk® series by BYK-Chemie GmbH, Solsperse® and Solplus® range from Lubrizol, RM and PFE range from Miteni, EFKA range from BASF, Fomblin® Z, and Fluorolink® series from Solvay Solexis, Novec® series from 3M, Krytox® and Capstone® series available from DuPont.

Preferred are poly(hexafluoropropylene oxide) polymeric surfactants with a monofunctional carboxylic acid end group, further preferred are poly(hexafluoropropylene oxide) polymeric surfactants with a monofunctional carboxylic acid end group and a weight-average molecular weight Mw between 1000 and 10000, most preferred between 3000 and 8000 and especially preferred between 5000 and 8000. Most preferred is Krytox® 157 FSH.

Krytox® 157 FS is a functionalized version of the DuPont series of Krytox® fluorinated oils that acts as a surfactant. The functionality is a carboxylic acid group located on the terminal fluoromethylene group of poly(hexafluoropropylene oxide). Krytox® 157 FS is available in three relatively broad molecular weight ranges designated as low (L), medium (M), and high (H) with the following typical properties. Krytox® 157 FS is insoluble in most common organic solvents. Further suitable Krytox® surfactants comprise the following end groups: methyl ester, methylene alcohol, primary iodide, allyl ether or a benzene group. Preferable, surfactant additives in this work is Krytox® 157 FSH.

Advantageously, combinations of the following compounds are used in the present process:
in step a'): a dye, methanol, perfluoro(tributylamine), and a poly(hexafluoropropylene oxide) polymeric surfactant with a monofunctional carboxylic acid end group and a weight-average molecular weight Mw between 5000 and 8000.

The present coloured or black particles prepared without use of a polymer comprise preferably 70 - 99 %, especially 80 - 95 %, by weight of a dye based on the combined weights of dye and surfactant.

The coloured polymer particles (not according to the invention) are preferably spherical particles with a size (diameter) in the range of 50 - 2000 nm and preferably with a monodisperse size distribution. Preferred particle sizes are 80 -1900 nm, preferably 90 - 1500 nm. Particle sizes are determined by photon correlation spectroscopy by a common apparatus such as a Malvern NanoZS particle analyser. Larger agglomerates that eventually form during the reaction can be removed post reaction. Methods include filtering, centrifuging, sieving. Typically a 5 micron filter cloth is used. Centrifuging can also be employed to remove smaller unwanted polymer particles that may be formed during the reaction.

The present process comprises the steps of forming a reverse emulsion of a continuous phase comprising at least one non-polar perfluorinated solvent and an internal phase comprising at least one polar solvent and removing the polar solvent or polar solvents by evaporative methods.

The present process comprises the steps of
a') forming a reverse emulsion comprising at least one dye, at least one polar solvent, at least one non-polar perfluorinated solvent, and at least one fluorinated surfactant,
   and
b) removing the polar solvent or polar solvents by evaporative methods, wherein the non-polar perfluorinated solvent or solvents are not removed.

The reverse emulsion of step a') is prepared by: a'1) forming a polar phase by mixing at least one dye and at least one polar solvent, a'2) forming a non-polar phase by mixing at least one non-polar perfluorinated solvent and at least one fluorinated surfactant, a'3) combining the polar phase and the non-polar phase, and a'4) homogenising the combined phases to form the reverse emulsion.

An additional step c) can be conducted for concentrating or removing the non-polar solvent or non-polar solvents. Preferably, a stirred filtration cell can be used. It is especially advantageous that step c) can be omitted if the continuous phase consists of the solvent intended for use in the electrophoretic solvent. However, the present invention can also provide the coloured or black particles directly. If requested, purification of the polymer particles according to the invention is possible by methods familiar to the person skilled in the art, such as filtration, centrifuging, and sieving.

Preferably, the process of the invention consists of step a') and step b), and optionally step c). Most preferred is a process consisting of steps a'1), a'2), a'3), a'4) and step b), and optionally step c).

Advantageously, a process consisting of steps a'1), a'2), a'3), a'4) and step b) and step c) for concentrating provides a dispersion directly suitable for electrophoretic fluids.

The reverse emulsion is preferably formed using some form of shear. This shear may be in the form of high shear homogenisation by for example a Silverson homogeniser or sonication by for example a Branson Sonifier. It is often advantageous to form a reverse pre-emulsion using low shear and then higher shear to form the desired particle size. The shear is preferably applied once the non-polar continuous phase and polar discontinuous phase have been formed, separately mixed until homogeneous and then combined to form a 2-phase system. Additionally, shear may be advantageous to form the polar phase which can be done using high shear homogenisation or sonication.

Advantageously, the present process can be easily scaled up.

Optionally, the dispersions may be coloured, i.e. by adding a dye which is soluble in the non-polar solvent.

In particular, the inventive process concerns dispersions, especially EPD fluids, comprising a non-polar perfluorinated solvent and coloured or black particles, wherein the particles consist of a dye and a fluorinated surfactant.

Especially preferred non-polar perfluorinated solvents, dyes, and fluorinated surfactants and combinations thereof are described in the foregoing.

Preferred compounds and compound combinations of the variants given above are provided by use of the preferred compounds as described in the foregoing related to the preferred processes according to the invention.

Particles and dispersions prepared according to the inventive process are primarily designed for use in electrophoretic applications, especially for use in mono, bi or polychromal electrophoretic devices. A typical electrophoretic display comprises an electrophoretic fluid comprising the particles dispersed in a low polar or non-polar solvent along with additives to improve electrophoretic properties, such as stability and charge. Examples of such electrophoretic fluids are well described in the literature, for example US 7,247,379; WO 99/10767; US 2007/0128352; US 7,236,290; US 7,170,670; US 7,038,655; US 7,277,218; US 7,226,550; US 7,110,162; US 6,956,690; US 7,052,766; US 6,194,488; US 5,783,614; US 5,403,518; US 5,380,362.

The particles may be used in combination with a dyed fluid with additional particles such as oppositely or equally charged particles of different colour.

Typical additives to improve the stability of the fluid (either by steric stabilisation or by use as a charging agent) are known to experts in the field and include (but are not limited to) the Brij, Span and Tween series of surfactants (Aldrich), Infineum surfactants (Infineum), the Solsperse, Ircosperse and Colorburst series (Lubrizol), the OLOA charging agents (Chevron Chemicals) and Aerosol-OT (Aldrich). Typical surfactants used in this process are cationic, anionic, zwitterionic or non-ionic with a hydrophilic portion usually termed the head group which is mono-, di- or polysubstituted with a hydrophobic portion usually termed the tail. The hydrophilic head group of the surfactant in this process can be, but is not limited to being, made up of derivatives of sulfonates, sulfates, carboxylates, phosphates, ammoniums, quaternary ammoniums, betaines, sulfobetaines, imides, anhydrides, polyoxyethylene (e. g. PEO/PEG/PPG), polyols (e. g. sucrose, sorbitan, glycerol etc), polypeptides and polyglycidyls. The hydrophobic tail of the surfactant in this process can be, but is not limited to being, made up of straight and branched chain alkyls, olefins and polyolefins, rosin derivatives, PPO, hydroxyl and polyhydroxystearic acid type chains, perfluoroalkyls, aryls and mixed alkyl-aryls, silicones, lignin derivatives, and partially unsaturated versions of those mentioned above. Surfactants for this process can also be catanionic, bolaforms, gemini, polymeric and polymerisable type surfactants.

Any other additives to improve the electrophoretic properties can be incorporated provided they are soluble in the formulation medium, in particular thickening agents or polymer additives designed to minimise settling effects.

In case another dispersion solvent shall be used in addition or separately for particles, it can be chosen primarily on the basis of dielectric constant, refractive index, density and viscosity. A preferred solvent choice would display a low dielectric constant (<10, more preferably <5), high volume resistivity (about 10¹⁵ ohm-cm), a low viscosity (less than 5cst), low water solubility, a high boiling point (>80°C) and a refractive index and density similar to that of the particles. Adjustment of these variables can be useful in order to change the behaviour of the final application. For example, in a slow-switching application such as poster displays or shelf labels, it can be advantageous to have an increased viscosity to improve the lifetime of the image, at the cost of slower switching speeds. However in an application requiring fast switching, for example e-books and displays, a lower viscosity will enable faster switching, at the cost of the lifetime in which the image remains stable (and hence an increase in power consumption as the display will need more frequent addressing). The preferred solvents are often non-polar hydrocarbon solvents such as the Isopar series (Exxon-Mobil), Norpar, Shell-Sol (Shell), Sol-Trol (Shell), naphtha, and other petroleum solvents, as well as long chain alkanes such as dodecane, tetradecane, decane and nonane). These tend to be low dielectric, low viscosity, and low density solvents. A density matched particle / solvent mixture will yield much improved settling/sedimentation characteristics and thus is desirable. For this reason, often it can be useful to add a halogenated solvent to enable density matching. Typical examples of such solvents are the Halocarbon oil series (Halocarbon products), or tetrachlorethylene, carbon tetrachloride, 1,2,4-trichlorobenzene and similar solvents. The negative aspect of many of these solvents is toxicity and environmental friendliness, and so in some cases it can also be beneficial to add additives to enhance stability to sedimentation rather than using such solvents.

The preferred additives and solvents used in the formulation of the particles are Aerosol OT (Aldrich), Span 85 (Aldrich), MCR-C22 (Gelest), and dodecane (Sigma Aldrich). Especially, MCR-C22 (Gelest) and dodecane (Sigma Aldrich) can be used.

Lists of suitable solvents and dispersants for electrophoretic displays can be found in existing literature, in particular WO 99/10767 and WO 2005/017046. The electrophoretic fluid is then incorporated into an electrophoretic display element by a variety of pixel architectures, such as can be found in C. M. Lampert, Displays; 2004, 25(5) published by Elsevier B.V., Amsterdam.

The electrophoretic fluid may be applied by several techniques such as inkjet printing, slot die spraying, nozzle spraying, and flexographic printing, or any other contact or contactless printing or deposition technique.

Electrophoretic displays comprise typically, the electrophoretic display media in close combination with a monolithic or patterned backplane electrode structure, suitable for switching the pixels or patterned elements between the black and white optical states or their intermediate greyscale states.

The dispersions and the coloured and black particles prepared according to the present invention are suitable for all known electrophoretic media and electrophoretic displays, e.g. flexible displays, TIR-EPD (total internal reflection electrophoretic devices), one particle systems, two particle systems, dyed fluids, systems comprising microcapsules, microcup systems, air gap systems and others as described in C. M. Lampert, Displays; 2004, 25(5) published by Elsevier B.V., Amsterdam. Examples of flexible displays are dynamic keypads, e-paper watches, dynamic pricing and advertising, e-readers, rollable displays, smart card media, product packaging, mobile phones, lab tops, display card, digital signage, shelf edge labels, etc.

Particles and dispersions prepared according to the invention may also be used in optical, electrooptical, electronic, electrochemical, electrophotographic, electrowetting, electro-osmosis, and electrohydrodynamic displays and/or devices, e.g. TIR (total internal reflection electronic devices), and in security, cosmetic, decorative, signage, and diagnostic applications. The use in electrowetting displays is preferred. Electrowetting (EW) is a physical process where the wetting properties of a liquid droplet are modified by the presence of an electric field. This effect can be used to manipulate the position of a coloured fluid within a pixel. For example, a nonpolar (hydrophobic) solvent containing colourant can be mixed with a clear colourless polar solvent (hydrophilic), and when the resultant biphasic mixture is placed on a suitable electrowetting surface, for example a highly hydrophobic dielectric layer, an optical effect can be achieved. When the sample is at rest, the coloured non-polar phase will wet the hydrophobic surface, and spread across the pixel. To the observer, the pixel would appear coloured. When a voltage is applied, the hydrophobicity of the surface alters, and the surface interactions between the polar phase and the dielectric layer are no longer unfavourable. The polar phase wets the surface, and the coloured non-polar phase is thus driven to a contracted state, for example in one corner of the pixel. To the observer, the pixel would now appear transparent. A typical electrowetting display device consists of the particles in a low polar or non-polar solvent along with additives to improve properties, such as stability and charge. Examples of such electrowetting fluids are described in the literature, for example in WO2011/017446, WO 2010/104606, and WO 2011/075720.

The following examples explain the present invention in greater detail.

### Examples

FC-43 and Novec® 7500 are purchased from Acota Ltd, UK. Krytox® 157 FS(H) (= Krytox® 157 FSH, weight-average molecular weight Mw 7000-7500) is purchased from GBR Technologies, UK. Methanol is purchased from VWR. Direct Black 22, Acid Black 52 and Acid Black 132 are acquired from Simpsons UK and Colour Synthesis Solutions Limited, UK. Acid Black 107 and Acid Black 172 are acquired from Town End (Leeds) pic, UK. Solvent Black 27 and Solvent Black 29 are acquired from Keystone Europe Ltd, UK. Polyvinyl pyrrolidone (weight-average average molecular weight Mw = 29 000), poly(acrylic acid) (weight-average average molecular weight Mw 100,00), Solvent Blue 35, Acid Red 37, Acid Fuchsine, and 1,2,2,6,6-pentamethyl-4-piperidinol are purchased from Sigma- Aldrich, UK. MCR-C22 (monocarbinol terminated PDMS) is purchased from Gelest.

The characterisation of the formulations is performed using a Malvern NanoZS particle analyser. This instrument measures the size of particles in dispersion and the zeta potential of an electrophoretic fluid. The Zeta potential (ZP) is derived from the real-time measurement of the electrophoretic mobility and thus is an indicator of the suitability of the fluid for use in electrophoretic applications.

The colour coordinates of this dispersion are measured using an X-rite Color i5 spectrophotometer in a 50 micron thickness glass cell in reflective mode unless stated otherwise.

### Comparative Example 1: Preparation of a Dispersion of Black Dyed PVP Particles

Solvent Black 27 (0.70 g), polyvinyl pyrrolidone (0.70 g, Mw = 29000) and methanol (10 ml) are combined in a first flask, vortex mixed and then stirred on a roller-mixer for 3 hours.

Krytox® 157-FS (H) (0.70 g) and FC-43 (10 ml) are added to a second flask and are homogenised using shear-mixing for five minutes.

The mixture in the first flask is dripped into the fluorinated mixture in the second flask, continuing to mix on the shear mixer for two minutes. The combined mixture is sonicated for 5 minutes at 40% strength on a Branson Sonifier to form an emulsion (whilst being cooled in an ice bath).

The emulsion is added to a 100 ml florentine flask and evaporated on a rotary evaporator. The temperature of the water bath is 60°C and the pressure is set to 350 mbar. The pressure is reduced in 50 mbar steps to 50 mbar to remove the methanol. The dispersion is filtered through 50 micron cloth, solid content is calculated. Particle size is 124 nm.

An electrophoretic ink is prepared by vortex mixing 0.066 g of the black particles (3.0 wt% particles), 0.011 g of Krytox® 157-FS(H) (0.5 wt% in FC43) and 2.123 g of FC-43 The dispersion is then roller mixed for a minimum of 30 minutes. Drops of this dispersion are added to 1.0 ml of FC-43 until the solution is slightly turbid and roller mixed for a minimum of 30 minutes. NanoZS particle analyser shows zP: -110.0 mV mobility: -3.92x10⁻¹⁰ m²/Vs and Xrite spectrophotometer shows L* measurement is 0.5 and Y is 4.1. Similarly prepared particles are made and measured using different dye, polymer and surfactant combinations as shown in Table 2 and Table 3.

**Table 2**

| **Comp. Example** | **FC-43 (ml)** | **Krytox® (g)** | **MeOH (ml)** | **PVP (g)** | **Dye** | **Dye (g)** | **Y-Value** | **L*** | **Size (nm)** | **Zeta Potential (mV)** | **Mobility (x10⁻¹⁰ m²/Vs)** |
|---|---|---|---|---|---|---|---|---|---|---|---|
| 1 | 10 | 0.7 | 10 | 0.7 | Solvent Black 27 | 0.7 | 0.5 | 4.1 | 124 | -110.0 | -3.92 |
| 2 | 10 | 1.2 | 10 | 0.7 | Solvent Black 27 | 0.7 | 0.3 | 3.1 | 99 | 42.40 | 1.52 |
| 3 | 10 | 1.0 | 10 | 0.7 | Solvent Black 27 | 0.7 | 0.3 | 3.1 | 107 | 16.10 | 0.58 |
| 4 | 30 | 1.2 | 10 | 2.4 | Acid Black 52 | 0.1 | 28.3 | 60.1 | 106 | 145.00 | 5.20 |
| 5 | 30 | 1.2 | 10 | 2.4 | Acid Black 132 | 0.1 | 37.7 | 67.8 | 95 | -301.00 | -10.76 |
| 6 | 30 | 1.2 | 10 | 2.4 | Acid Black 107 | 0.1 | 33.0 | 64.1 | 113 | 189.00 | 6.77 |
| 7 | 30 | 1.2 | 10 | 2.4 | Acid Black 172 | 0.1 | 40.7 | 70.0 | 103 | | |
| 8 | 30 | 1.2 | 10 | 2.4 | Solvent Black 27 | 0.1 | 25.3 | 57.4 | 111 | | |
| 9 | 30 | 1.2 | 10 | 2.4 | Direct Black 22 | 0.1 | 25.6 | 57.7 | 108 | -26.20 | -0.94 |

**Table 3**

| **Comp. Example** | **FC-43 (ml)** | **Krytox® (g)** | **Solvent** | **Solvent (ml)** | **Polymer** | **Polymer (g)** | **Dye** | **Dye (g)** | **Particle Size (nm)** |
|---|---|---|---|---|---|---|---|---|---|
| 10 | 30 | 1.2 | Methanol | 10 | PAA | 2.4 | Solvent Black 29 | 0.12 | 182 |
| 11 | 30 | 1.2 | Water | 10 | PAA | 2.4 | Acid Red 37 | 0.12 | 213 |
| 12 | 30 | 1.2 | Water | 10 | PAA | 2.4 | Acid Fuchsin | 0.12 | 210 |
| 13 | 30 | 1.2 | Water | 10 | PVP | 2.4 | Acid Red 37 | 0.12 | 173 |
| 14 | 30 | 1.2 | Water | 10 | PVP | 2.4 | Acid Fuchsin | 0.12 | 190 |
| 15 | 30 | 1.2 | Water | 10 | PVP | 2.4 | Acid Fuchsin | 0.24 | 180 |

### Example 16: Preparation of a Dispersion of Black Particles

Solvent Black 29 (2.00 g) and methanol (10 ml) are combined in a flask, vortex mixed and then stirred on the roller-mixer.

Krytox® 157-FS(H) (0.20 g) and FC-43 (10 ml) are added to a flask and are homogenised for five minutes.

The dyed methanol solution is dripped into the fluorinated phase, continuing to mix on the shear mixer for two minutes. The solution is then sonicated for 5 minutes at 40% strength on a Branson Sonifier to form an emulsion (whilst being cooled in an ice bath).

The emulsion is added to a 100 ml florentine flask and evaporated on a rotary evaporator. The temperature of the water bath is 60°C and the pressure is set to 350 mbar. The pressure is reduced in 50 mbar steps to 50mbar to complete removal of methanol.

Particle size is 222 nm, PDI = 0.09.

Particles are formulated (3% particles and 0.5% Krytox® in FC-43):
0.072 g of the black particles, 0.012 g of Krytox® 157-FS(H) and 2.314 g of FC-43 are combined and measured as described in example 1. zP: -40.3 mV, Mobility:-1.44 x10⁻¹⁰ m²/Vs
L* 4.7 and Y is 0.52.

Similarly prepared particles are made, formulated and measured using the following amounts of reagents as shown in Table 4.

**Table 4**

| **Example** | **FC-43 / ml** | **Krytox® / g** | **Methanol /ml** | **Dye Type** | **Dye / g** | **Y-Value** | **L*** | **Size / nm** | **PDI** | **Zeta Potential / mV** | **Mobility (x10⁻¹⁰ m²/Vs)** |
|---|---|---|---|---|---|---|---|---|---|---|---|
| | | | | | | | | | | | |
| 16 | 10.0 | 0.2 | 10.0 | Solvent Black 29 | 2.0 | 0.5 | 4.7 | 222 | 0.09 | -40.30 | -1.44 |
| 17 | 15.0 | 0.8 | 10.0 | Solvent Black 27 | 1.5 | 0.4 | 3.8 | 200 | 0.42 | -134.00 | -4.80 |
| 18 | 15.0 | 0.8 | 10.0 | Solvent Black 29 | 1.5 | 0.4 | 4.0 | 142 | 0.16 | 253.00 | 9.06 |
| 19 | 15.0 | 0.8 | 10.0 | Acid Black 52 | 1.5 | 0.3 | 2.5 | 115 | 0.07 | | |
| 20 | 15.0 | 0.8 | 10.0 | Acid Black 107 | 1.5 | 0.4 | 3.9 | 129 | 0.16 | 20.20 | 0.72 |
| 21* | 10 | 0.2 | 10 | Solvent Black 27 | 2.0 | 0.3 | 2.6 | 357 | 0.36 | 42.2 | 1.51 |

| | | | | | | | | | | | |
|---|---|---|---|---|---|---|---|---|---|---|---|
| *Reaction* carried out using 20 mL dodecane and 15 mL methanol. | | | | | | | | | | | |

### Example 22: Preparation of a Dispersion of Black Particles using 2 dyes

Solvent Black 29 (1.00 g), Solvent Black 27 (1.01 g) and methanol (10 ml) are combined in a flask, vortex mixed and then stirred on the roller-mixer. Krytox® 157-FS(H) (0.20 g) and FC-43 (10 ml) are added to a flask and are homogenised for five minutes.

The experiment is repeated as described for example 16.

Particle size is 111 nm
Particles are formulated and measured (3% particles and 0.5% Krytox® in FC-43):
zP: 54.30 mV, Mobility: 1.94 x10⁻¹⁰ m²/Vs
L* 3.22 and Y is 0.36.

### Example 23: Preparation of Black Particles with Incorporation of Hindered Amine Light Stabiliser (HALS)

Solvent Black 29 (2.00 g), 1,2,2,6,6-pentamethyl-4-piperidinol (0.02 g) and methanol (10 ml) are combined in a flask, vortex mixed and then stirred on the roller-mixer.

Krytox® 157-FS(H) (0.2 g) and FC-43 (10 ml) are added to a flask and homogenised on a Turax shear-mixer for five minutes.

The experiment is repeated as described for example 16.

Particle size is 109 nm

Particles are formulated and measured (3% particles and 0.5% Krytox® in FC-43):
zP: -43.6 mV, Mobility: -1.56 x10⁻¹⁰ m²/Vs
L* 2.85 and Y is 0.32.

### Example 24: Preparation of Black Particles with further concentration of Fluid

Solvent Black 29 (12.0 g) and methanol (60 ml) are combined in a flask, vortex mixed and then stirred on the roller-mixer.

Krytox® 157-FS(H) (1.2 g) and FC-43 (60 ml) are added to a flask and are homogenised for ten minutes.

The dyed methanol solution is poured slowly onto the oil phase, continuing to mix on the shear mixer for ten minutes. The experiment is then followed as described in example 16.

Particle size is 221 nm.

Particles are formulated and measured (1.0% particles and 0.5% Krytox® in FC-43) as described in Example 16.

zP: 55.50 mV, Mobility: 1.99 x10⁻¹⁰ m²/Vs.

The colour coordinates of this dispersion are measured using an X-rite Color i5 spectrophotometer in transmissive mode, using a 50 micron thickness ITO cell and are: L* 38.49 and Y is 10.36.

The sample is washed using a stirred filtration kit with a 0.1 micron filter under ∼10 psi pressure over a weekend. Solid content is increased from 10.51 % to 19.78%. A 1:1 equivalent of Novec® 7500 to FC-43 is added to the solution and the sample re-concentrated overnight, with the solids content increasing to 28.19%. Screening results after each wash are as follows in Table 5.

**Table 5**

| Wash # | Y-Value | L* | Size / nm | PDI | Zeta Potential / mV | Mobility (x10⁻¹⁰ m²/Vs) |
|---|---|---|---|---|---|---|
| 1 | 11.0 | 39.5 | 235 | 0.19 | 40.60 | 1.45 |
| 2 | 13.7 | 43.9 | 233 | 0.14 | 39.60 | 1.42 |

### Comparative Example 25: Preparation of Black Particles in Dodecane

Direct Black 22 (0.50 g) and methanol (10 ml) are combined in a flask, vortex mixed and then stirred on the roller-mixer.

Monocarbinol terminated PDMS (MCR-C22, Gelest) (0.05 g) and dodecane (10 ml) are added to a flask and homogenised for five minutes.
The experiment is then repeated as described for example 16

Particles are formulated and measured (1% particles and 1% AOT in dodecane):
L* 83.6 and Y is 63.2.

Similarly prepared particles are synthesised and formulated with the following parameters as shown in Table 6.

**Table 6**

| **Comp. Example** | **Surfactant** | **Surfactant / g** | **Dye** | **Dye / g** | **Y Value** | **L*** | **Size / nm** | **PDI** |
|---|---|---|---|---|---|---|---|---|
| 26 | Solsperse 17k | 0.16 | Acid Black 107 | 1.6 | 25.6 | 57.6 | 464 | 0.46 |
| 27 | OLOA | 0.16 | Acid Black 107 | 1.6 | 26.4 | 58.4 | 886 | 0.82 |
| 28 | Solsperse 17k | 0.35 | Solvent Black 27 | 3.500 | 65.5 | 84.8 | | |
| 29 | Solsperse 17k | 0.32 | Acid Black 107 | 1.600 | 44.1 | 72.3 | 221 | 0.29 |
| 30 | Solsperse 17k | 0.48 | Acid Black 107 | 1.600 | 51.1 | 76.8 | 182 | 0.25 |
| 31 | Solsperse 17k | 0.64 | Acid Black 107 | 1.600 | 52.0 | 77.3 | 228 | 0.31 |
| 32 | Solsperse 17k | 0.80 | Acid Black 107 | 1.600 | 45.3 | 73.1 | 386 | 0.59 |
| 33 | Solsperse 17k | 0.20 | Acid Black 172 | 1.000 | 76.0 | 89.9 | | |

## Claims

1. A process for the preparation of coloured or black particles dispersed in a non-polar solvent comprising the following steps:
a') forming a reverse emulsion comprising at least one dye, at least one polar solvent, at least one non-polar perfluorinated solvent, and at least one fluorinated surfactant,
and
b) removing the polar solvent or polar solvents by evaporative methods, wherein the non-polar perfluorinated solvent or solvents are not removed,
wherein the coloured or black particles consist of a dye and a fluorinated surfactant, and the polar solvent is selected from water, ethanol, methanol, acetonitrile, DMSO, DMF or mixtures thereof, and the dye is selected from Acid Red 37, Acid Fuchsine, Solvent Blue 35, Solvent Black 27, Solvent Black 29, Solvent Black 34, Acid Black 52, Acid Black 107, Acid Black 132, Acid Black 172, Acid Black 194, Acid Black 211, Acid Black 222, Direct Black 19, Direct Black 22, Direct Black 51, Direct Black 80, and Direct Black 112.

2. Process according to claim 1, **characterised in that** the reverse emulsion of step a') is prepared by:
a'1) forming a polar phase by mixing at least one dye and at least one polar solvent selected from water, ethanol, methanol, acetonitrile, DMSO, DMF or mixtures thereof, a'2) forming a non-polar phase by mixing at least one non-polar perfluorinated solvent and at least one fluorinated surfactant, a'3) combining the polar phase and the non-polar phase, and a'4) homogenising the combined phases to form the reverse emulsion.

3. Process according to claim 1 or 2, **characterised in that** the non-polar perfluorinated solvent is selected from the Fluorinert® FC or Novec® series from 3M and the Galden® series from Solvay Solexis.

4. Process according to one or more of claims 1 to 3, **characterised in that** the fluorinated surfactant is selected from the Disperbyk® series by BYK-Chemie GmbH, Solsperse® and Solplus® range from Lubrizol, RM and PFE range from Miteni, EFKA range from BASF, Fomblin® Z and Fluorolink® series from Solvay Solexis, Novec® series from 3M, Krytox® and Capstone® series from DuPont.

5. Process according to one or more of claims 1 to 4, **characterised in that** the dye is selected from Direct Black 22, Acid Black 52, Acid Black 132, Acid Black 107, Acid Black 172, Solvent Black 27, Solvent Black 29, Solvent Blue 35, Acid Red 37 and Acid Fuchsine.

6. Process according to one or more of claims 1 to 5, **characterised in that** the dye is selected from Direct Black 22, Acid Black 52, Acid Black 132, Acid Black 107, Acid Black 172, Solvent Black 27, and Solvent Black 29.

7. Process according to one or more of claims 1 to 6, **characterised in that** the polar solvent used in step a') is selected from water and/or ethanol.

8. Process according to one or more of claims 1 to 2, **characterised in that** the reverse emulsion comprises perfluoro(tributylamine) as non-polar phase and water, ethanol, methanol or mixtures thereof as polar phase.

9. Process according to one or more of claims 1 to 8, **characterised in that** it comprises additionally step c) concentrating the non-polar solvent or solvents.

## Patentansprüche

1. Verfahren zur Herstellung farbiger oder schwarzer, in einem nichtpolaren Lösungsmittel dispergierter Teilchen, umfassend die folgenden Schritte:
a') Bilden einer Umkehremulsion enthaltend mindestens einen Farbstoff, mindestens ein polares Lösungsmittel, mindestens ein nichtpolares perfluoriertes Lösungsmittel und mindestens ein fluoriertes Tensid,
und
b) Entfernen des polaren Lösungsmittels oder der polaren Lösungsmittel durch Verdampfungsverfahren,
wobei das nichtpolare perfluorierte Lösungsmittel oder die nichtpolaren perfluorierten Lösungsmittel nicht entfernt werden,
wobei die farbigen oder schwarzen Teilchen aus einem Farbstoff und einen fluorierten Tensid bestehen und das polare Lösungsmittel aus Wasser, Ethanol, Methanol, Acetonitril, DMSO, DMF oder Mischungen davon ausgewählt ist und der Farbstoff aus Acid Red 37, Säurefuchsin, Solvent Blue 35, Solvent Black 27, Solvent Black 29, Solvent Black 34, Acid Black 52, Acid Black 107, Acid Black 132, Acid Black 172, Acid Black 194, Acid Black 211, Acid Black 222, Direct Black 19, Direct Black 22, Direct Black 51, Direct Black 80 und Direct Black 112 ausgewählt ist.

2. Verfahren nach Anspruch 1, **dadurch gekennzeichnet, dass** die Umkehremulsion von Schritt a') hergestellt wird, indem man:
a'1) eine polare Phase bildet, indem man mindestens einen Farbstoff und mindestens ein aus Wasser, Ethanol, Methanol, Acetonitril, DMSO, DMF oder Mischungen davon ausgewähltes polares Lösungsmittel mischt, a'2) eine nichtpolare Phase bildet, indem man mindestens ein nichtpolares perfluoriertes Lösungsmittel und mindestens ein fluoriertes Tensid mischt, a'3) die polare Phase und die nichtpolare Phase vereinigt und a'4) die vereinigten Phasen homogenisiert, um die Umkehremulsion zu bilden.

3. Verfahren nach Anspruch 1 oder 2, **dadurch gekennzeichnet, dass** das nichtpolare perfluorierte Lösungsmittel aus der Fluorinert® FC- oder Novec®-Serie von 3M und der Galden®-Serie von Solvay Solexis ausgewählt ist.

4. Verfahren nach einem oder mehreren der Ansprüche 1 bis 3, **dadurch gekennzeichnet, dass** das fluorierte Tensid aus der Disperbyk®-Serie von BYK-Chemie GmbH, Solsperse®- und Solplus®-Reihe von Lubrizol, RM- und PFE-Reihe von Miteni, EFKA-Reihe von BASF, Fomblin®Z- und Fluorolink®-Serie von Solvay Solexis, Novec®-Serie von 3M, Krytox®- und Capstone®-Serie von DuPont ausgewählt ist.

5. Verfahren nach einem oder mehreren der Ansprüche 1 bis 4, **dadurch gekennzeichnet, dass** der Farbstoff aus Direct Black 22, Acid Black 52, Acid Black 132, Acid Black 107, Acid Black 172, Solvent Black 27, Solvent Black 29, Solvent Blue 35, Acid Red 37 und Säurefuchsin ausgewählt ist.

6. Verfahren nach einem oder mehreren der Ansprüche 1 bis 5, **dadurch gekennzeichnet, dass** der Farbstoff aus Direct Black 22, Acid Black 52 Acid Black 132, Acid Black 107, Acid Black 172, Solvent Black 27 und Solvent Black 29 ausgewählt ist.

7. Verfahren nach einem oder mehreren der Ansprüche 1 bis 6, **dadurch gekennzeichnet, dass** das in Schritt a') verwendete polare Lösungsmittel aus Wasser und/oder Ethanol ausgewählt ist.

8. Verfahren nach einem oder mehreren der Ansprüche 1 bis 2, **dadurch gekennzeichnet, dass** die Umkehremulsion Perfluor(tributylamin) als nichtpolare Phase und Wasser, Ethanol, Methanol oder Mischungen davon als polare Phase enthält.

9. Verfahren nach einem oder mehreren der Ansprüche 1 bis 8, **dadurch gekennzeichnet, dass** es zusätzlich Schritt c) Einengen des nichtpolaren Lösungsmittels oder der nichtpolaren Lösungsmittel umfasst.

## Revendications

1. Procédé de préparation de particules colorées ou noires dispersées dans un solvant non polaire, comprenant les étapes suivantes :
a') la formation d'une émulsion inverse comprenant au moins un colorant, au moins un solvant polaire, au moins un solvant perfluoré non polaire, et au moins un agent tensioactif fluoré,
et
b) l'élimination du solvant polaire ou des solvants polaires par des méthodes évaporatives,
dans lequel le solvant ou les solvants perfluorés non polaires ne sont pas éliminés,
dans lequel les particules colorées ou noires sont constituées d'un colorant et d'un agent tensioactif fluoré, et le solvant polaire est choisi parmi l'eau, l'éthanol, le méthanol, l'acétonitrile, le DMSO, le DMF ou des mélanges de ceux-ci, et le colorant est choisi parmi Acid Red 37, Acid Fuchsine, Solvent Blue 35, Solvent Black 27, Solvent Black 29, Solvent Black 34, Acid Black 52, Acid Black 107, Acid Black 132, Acid Black 172, Acid Black 194, Acid Black 211, Acid Black 222, Direct Black 19, Direct Black 22, Direct Black 51, Direct Black 80, et Direct Black 112.

2. Procédé selon la revendication 1, **caractérisé en ce que** l'émulsion inverse de l'étape a') est préparée par :
a'1) la formation d'une phase polaire par le mélange d'au moins un colorant et d'au moins un solvant polaire choisi parmi l'eau, l'éthanol, le méthanol, l'acétonitrile, le DMSO, le DMF ou des mélanges de ceux-ci, a'2) la formation d'une phase non polaire par le mélange d'au moins un solvant perfluoré non polaire et d'au moins un agent tensioactif fluoré, a'3) la combinaison de la phase polaire et de la phase non polaire, et a'4) l'homogénéisation des phases combinées afin de former l'émulsion inverse.

3. Procédé selon la revendication 1 ou 2, **caractérisé en ce que** le solvant perfluoré non polaire est choisi parmi la série Fluorinert® FC ou Novec® de chez 3M et la série Galden® de chez Solvay Solexis.

4. Procédé selon l'une ou plusieurs parmi les revendications 1 à 3, **caractérisé en ce que** l'agent tensioactif fluoré est choisi parmi la série Disperbyk® de chez BYK-Chemie GmbH, la gamme Solsperse® et Solplus® de chez Lubrizol, la gamme RM et PFE de chez Miteni, la gamme EFKA de chez BASF, les séries Fomblin®Z et Fluorolink® de chez Solvay Solexis, la série Novec® de chez 3M, les séries Krytox® et Capstone® de chez DuPont.

5. Procédé selon l'une ou plusieurs parmi les revendications 1 à 4, **caractérisé en ce que** le colorant est choisi parmi Direct Black 22, Acid Black 52, Acid Black 132, Acid Black 107, Acid Black 172, Solvent Black 27, Solvent Black 29, Solvent Blue 35, Acid Red 37 et Acid Fuchsine.

6. Procédé selon l'une ou plusieurs parmi les revendications 1 à 5, **caractérisé en ce que** le colorant est choisi parmi Direct Black 22, Acid Black 52, Acid Black 132, Acid Black 107, Acid Black 172, Solvent Black 27, et Solvent Black 29.

7. Procédé selon l'une ou plusieurs parmi les revendications 1 à 6, **caractérisé en ce que** le solvant polaire utilisé dans l'étape a') est choisi parmi l'eau et/ou l'éthanol.

8. Procédé selon l'une ou plusieurs parmi les revendications 1 à 2, **caractérisé en ce que** l'émulsion inverse comprend de la perfluoro(tributylamine) comme phase non polaire et de l'eau, de l'éthanol, du méthanol ou des mélanges de ceux-ci comme phase polaire.

9. Procédé selon l'une ou plusieurs parmi les revendications 1 à 8, **caractérisé en ce qu'**il comprend de plus l'étape c) de concentration du ou des solvant(s) non polaire(s).
